(19) Europäisches Patentamt
European Patent Office
Office européen des brevets

(11) **EP 2 151 937 A1**

(12) **EUROPEAN PATENT APPLICATION**
published in accordance with Art. 153(4) EPC

(43) Date of publication:
**10.02.2010 Bulletin 2010/06**

(51) Int Cl.:
*H04J 15/00* (0000.00)    *H04B 7/02* (2006.01)
*H04B 7/04* (2006.01)    *H04B 7/06* (2006.01)
*H04J 11/00* (2006.01)    *H04Q 7/36* (0000.00)

(21) Application number: **08763976.1**

(22) Date of filing: **30.05.2008**

(86) International application number:
**PCT/JP2008/001379**

(87) International publication number:
**WO 2008/149533 (11.12.2008 Gazette 2008/50)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **31.05.2007 JP 2007145882**

(71) Applicant: **Panasonic Corporation
Kadoma-shi
Osaka 571-8501 (JP)**

(72) Inventors:
• **KIMURA, Ryohei**
  **Osaka 540-6207 (JP)**
• **HOSHINO, Masayuki**
  **Osaka 540-6207 (JP)**
• **YUDA, Yasuaki**
  **Osaka 540-6207 (JP)**

(74) Representative: **Grünecker, Kinkeldey,
Stockmair & Schwanhäusser
Anwaltssozietät
Leopoldstrasse 4
80802 München (DE)**

(54) **RADIO COMMUNICATION MOBILE STATION DEVICE AND CDD MODE JUDGING METHOD**

(57) Provided is a radio communication mobile station device which can accurately judge a CDD mode of an interference signal from other cell when using a CDD. In this device, a mode judging unit (110) specifies some data signals among data signals inputted from a demodulation unit (106) to be CDD channel estimation signals and measures SINR for each of the CDD channel estimation signals. The mode judging unit (110) judges a CDD mode of the interference signal from other cell according to a difference between average SINR of each pair of the CDD channel estimation signals formed by two CDD channel estimation signals. Moreover, when the mode judging unit (110) has judged that the CDD mode is SD-CDD, the mode judging unit (110) generates CQI corresponding to average SINR of all the CDD channel estimation signals.

FIG.1

**Description**

Technical Field

The present invention relates to a radio communication mobile station apparatus and a CDD mode identification method.

Background Art

In recent years, transmission techniques for realizing high speed and high capacity data transmission has been studied and a MIMO (Multi Input Multi Output) transmission technique using a plurality of antennas has been the focus of attention. In MIMO transmission, a plurality of antennas are provided both on the transmission side and the receiving side, a plurality of channels are prepared in space between radio transmission and radio reception, and, by spatially multiplexing the channels, it is possible to increase throughput.

Further, studies are conducted for the cyclic delay diversity (CDD, see non-patent document 1) technique as a peripheral technique in MIMO transmission, whereby the number of delay paths is equivalently increased to increase the frequency selectivity of a fading channel by transmitting from a plurality of antennas at the same time, signals to which different cyclic delays are given on a per antenna basis. Furthermore, CDD has two CDD modes, SD-CDD (Small Delay CDD), in which the amount of cyclic delay is small, and LD-CD (Large Delay CDD), in which the amount of cyclic delay is large.

With SD-CDD of a small amount of cyclic delay, fading channel fluctuation becomes moderate over all resource blocks (RBs). By adopting this SD-CDD to frequency scheduling, it is possible to acquire great frequency scheduling gain and provide the maximum multiuser diversity effect. SD-CDD is mainly suitable for data communication when a radio communication mobile station apparatus (hereinafter "mobile station") moves slowly. By contrast with this, with LD-CDD of a large amount of cyclic delay, fading channel fluctuation increases in RBs, so that it is possible to provide great frequency diversity gain. LD-CDD is an effective scheme for a mobile station to which frequency scheduling transmission is difficult to apply, like a mobile station moving extremely fast.

Further, there is a link adaptation technique as a peripheral technique in MIMO transmission. A link adaptation technique refers to adaptively controlling an MCS (Modulation and Coding Scheme) level showing a coding rate and a modulation scheme according to channel quality of channels between transmission and reception. In cases where a link adaptation technique is applied to mobile communication systems, mobile stations measure SINRs (Signal to Interference and Noise Ratios) of common reference signals on a per RB basis, and generates CQIs (Channel Quality Indicators), which are channel quality information corresponding to measured SINRs. Then, the mobile stations report a predetermined number of high level CQIs amongst a plurality of CQIs generated on a per RB basis, to a radio communication base station apparatus (hereinafter "base station"). Based on the CQIs from the mobile stations, the base station determines the MCS levels used in the mobile stations according to a predetermined scheduling algorithm.

Non-Patent Document 1: 3GPP RAN WG1 LTE Adhoc meeting (2006.01) R1-060011 "Cyclic Shift Diversity for E-UTRA DL Control Channels & TP"

Disclosure of Invention

Problems to be Solved by the Invention

A CDD mode, that is, SD-CDD or LD-CDD mode, is selected on a per mobile station basis, and therefore CDD cannot be applied to a common reference signal, which is common to all mobile stations. Therefore, the SINR of a common reference signal does not reflect the influence of a fading channel by CDD (hereinafter "CDD channel").

A mobile station is reported a CDD mode of a data signal from the base station, so that, by giving the same amount of cyclic delay of a data signal to a common reference signal, it is possible to reflect the influence of a CDD channel of the data signal for measurement of the SINR of the common reference signal. However, the mobile station is not reported the CDD mode of an interference signal from another cell, and therefore the mobile station does not know the CDD mode of the interference signal and cannot reflect the influence of a CDD channel by the interference signal for measurement of the SINR of the common reference signal.

Therefore, to eliminate an error between the SINR of the common reference signal and the SINR of the data signal, the mobile station needs to identify the CDD mode of an interference signal from another cell accurately.

Therefore it is an object of the present invention to provide a mobile station and CDD mode identification method that can identify the CDD mode of interference signal from another cell accurately when using CDD.

Means for Solving the Problem

The mobile station of the present invention adopts a configuration including: a receiving section that receives a multicarrier signal transmitted with cyclic delay diversity; a measuring section that measures, in the multicarrier signal, channel quality of a first signal group mapped to a plurality of first subcarriers and channel quality of a second signal group mapped to a plurality of second subcarriers that are different from the plurality of first subcarriers; and an identifying section that identifies a cyclic delay diversity mode of an interference signal from a remote cell based on a difference between the channel quality of the first signal group and the channel quality of the second signal group.

Advantageous Effects of Invention

According to the present invention, it is possible to accurately identify the CDD mode of an interference signal from another cell when CDD is used.

Brief Description of Drawings

FIG. 1 is a block diagram of a mobile station according to Embodiment 1 of the present invention;
FIG.2 shows symbol mapping (the number of cyclic delay shift samples: N/2), according to Embodiment 1 of the present invention;
FIG.3 shows frequency characteristics (where another cell applies SD-CDD), according to Embodiment 1 of the present invention;
FIG.4 shows the frequency characteristics (where another cell applies LD-CDD), according to Embodiment 1 of the present invention;
FIG.5 is a flow chart in the mode identifying section according to Embodiment 1 of the present invention;
FIG.6A shows feedback information (where another cell applies LD-CDD) according to Embodiment 1 of the present invention;
FIG.6B shows feedback information (where another cell applies SD-CDD: generating example 1) according to Embodiment 1 of the present invention;
FIG.6C shows feedback information (where another cell applies SD-CDD: generating example 2) according to Embodiment 1 of the present invention;
FIG.6D shows feedback information (where another cell applies SD-CDD: generating example 3) according to Embodiment 1 of the present invention;
FIG.7 is a block diagram of a base station according to Embodiment 1 of the present invention;
FIG.8A shows symbol mapping (mapping example 1), according to the embodiments of the present invention;
FIG.8B shows symbol mapping (mapping example 2), according to the embodiments of the present invention;
FIG.8C shows symbol mapping (mapping example 3), according to the embodiments of the present invention;
FIG.9 is a block diagram of a mobile station according to Embodiment 2 of the present invention;
FIG.10 is a block diagram of a base station according to Embodiment 2 of the present invention;
FIG.11 shows symbol mapping (the number of cyclic delay shift samples: N/2), according to Embodiment 2 of the present invention;
FIG.12A shows symbol mapping (the number of cyclic delay shift samples: N/3), according the embodiments of the present invention;
FIG.12B shows symbol mapping (the number of cyclic delay shift samples: N/4), according the embodiments of the present invention; and
FIG.12C shows symbol mapping (the number of cyclic delay shift samples: N/5), according the embodiments of the present invention.

Best Mode for Carrying Out the Invention

Now, embodiments of the present invention will be described in detail with reference to the accompanying drawings.

(Embodiment 1)

With the present embodiment, the CDD mode of an interference signal from another cell is identified using a CDD channel estimation signal pair configured with a plurality of data signals.

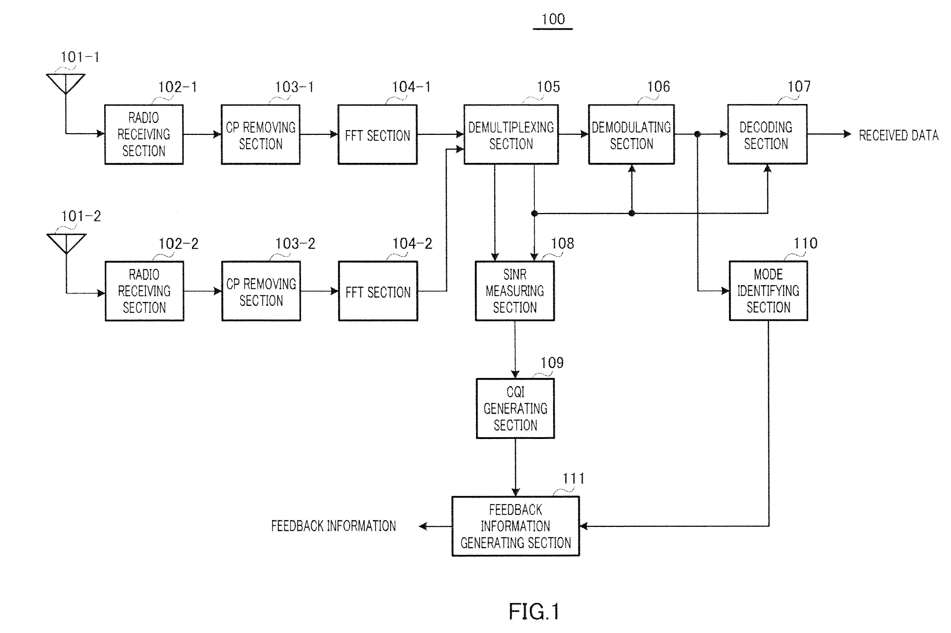

FIG.1 shows the configuration of mobile station 100 according to the present embodiment.

In mobile station 100 shown in FIG.1, radio receiving section 102-1, CP removing section 103-1 and FFT section 104-1 are provided corresponding to antenna 101-1. Radio receiving section 102-2, CP removing section 103-2 and FFT section 104-2 are provided corresponding to antenna 101-2.

Radio receiving sections 102-1 and 102-2 receive OFDM symbols, which are multicarrier signals transmitted from a base station (described later), via antenna 101-1 and 101-2, respectively, and perform receiving processing including down-conversion and A/D conversion on these OFDM symbols. Then, radio receiving sections 102-1 and 102-2 output the OFDM symbols after the radio receiving processing to CP removing sections 103-1 and 103-2, respectively. These OFDM symbols each include a data symbol, a common reference signal and a control signal. Further, these OFDM symbols receive interference in the channel by a signal from another cell.

CP removing sections 103-1 and 103-2 remove CPs from the OFDM symbols received as input from radio receiving sections 102-1 and 102-2, respectively. Then, CP removing sections 103-1 and 103-2 output the OFDM symbols without CPs to FFT (Fast Fourier Transform) sections 104-1 and 104-2, respectively.

FFT sections 104-1 and 104-2 perform an FFT on the OFDM symbols received as input from CP removing sections 103-1 and 103-2, respectively, to convert the time domain signals to frequency domain signals. Then, FFT sections 104-1 and 104-2 output the signals after the FFT to demultiplexing section 105.

Demultiplexing section 105 demultiplexes the signals after the FFT received as input from FFT sections 104-1 and 104-2 into a data symbol, a common reference signal and a control signal. Then, demultiplexing section 105 outputs the data symbol to demodulating section 106, the common reference signal to SINR measuring section 108, and the control signal to demodulating section 106, decoding section 107 and SINR measuring section 108.

Demodulating section 106 demodulates the data symbol received as input from demultiplexing section 105 based on a modulation scheme designated by the control signal received as input from demultiplexing section 105. Then, demodulating section 106 outputs the data signal after demodulation to decoding section 107 and mode identifying section 110.

Decoding section 107 decodes the data signal received as input from demodulating section 106 according to a coding rate designated by the control signal received as input from demultiplexing section 105. Then, decoding section 107 outputs the data signal after the decoding as received data.

SINR measuring section 108 measures the SINR of the common reference signal received as input from demultiplexing section 105 based on a CDD mode designated by the control signal. To be more specific, SINR measuring section 108 gives cyclic delay in the CDD mode designated by the control signal to the common reference signal, to measure an SINR of the common reference signal after the cyclic delay. Then, SINR measuring section 108 outputs the measured SINR to CQI generating section 109.

CQI generating section 109 generates a CQI corresponding to the SINR received as input from SINR measuring section 108 (hereinafter, "$CQI_{ref}$"). Then, CQI generating section 109 outputs $CQI_{ref}$ to feedback information generating section 111.

Mode identifying section 110 identifies the CDD mode of an interference signal from another cell. To be more specific, mode identifying section 110 first specifies several data signals as CDD channel estimation signals. Next, mode identifying section 110 measures SINRs on a per CDD channel estimation signal basis. Then, based on the difference between average SINRs of a plurality of CDD channel estimation signal pairs each configured with two CDD channel estimation signals, mode identifying section 110 identifies the CDD mode of an interference signal from another cell. When the identification result is SD-CDD, mode identifying section 110 outputs a CQI corresponding to an average SINR of all CDD channel estimation signals (hereinafter "$CQI_{CDD}$") to feedback information generating section 111. On the other hand, when the identification result is LD-CDD, mode identifying section 110 finishes the process without an output. The detail of the mode identification process in mode identifying section 110 will be described later.

When feedback information generating section 111 receives $CQI_{CDD}$ as input from mode identifying section 110, feedback information generating section 111 generates feedback information using $CQI_{CDD}$ and $CQI_{ref}$ received as input from CQI generating section 109. On the other hand, when feedback information generating section 111 does not receive $CQI_{CDD}$ from mode identifying section 110, feedback information generating section 111 generates feedback information using $CQI_{ref}$. Then, feedback information generating section 111 feeds back the generated feedback information to the base station (described later). The details of the feedback information generation process in feedback information generating section 111 will be described later.

Next, the details of the mode identification process in mode identifying section 110 will be described. When the CDD mode of the mobile station is LD-CDD, CDD channel fluctuation is significant and a radio bandwidth averaging interference power becomes wider, so that the effect of averaging interference power per subcarrier improves. Accordingly, in cases where the CDD mode of the mobile station is LD-CDD, even when the CDD mode of an interference signal from another cell is either LD-CDD or SD-CDD, CQI generating section 109 is able to generate an accurate CQI by a common reference signal. Therefore, when the CDD mode of the mobile station is LD-CDD, mode identifying section 110 does not need to identify the CDD mode of an interference signal from another cell. Consequently, mode identifying section 110 performs mode identification processing only when the CDD mode of the mobile station is SD-CDD. Then, in the following description, only the cases where the CDD mode of the mobile station is SD-CDD will be explained.

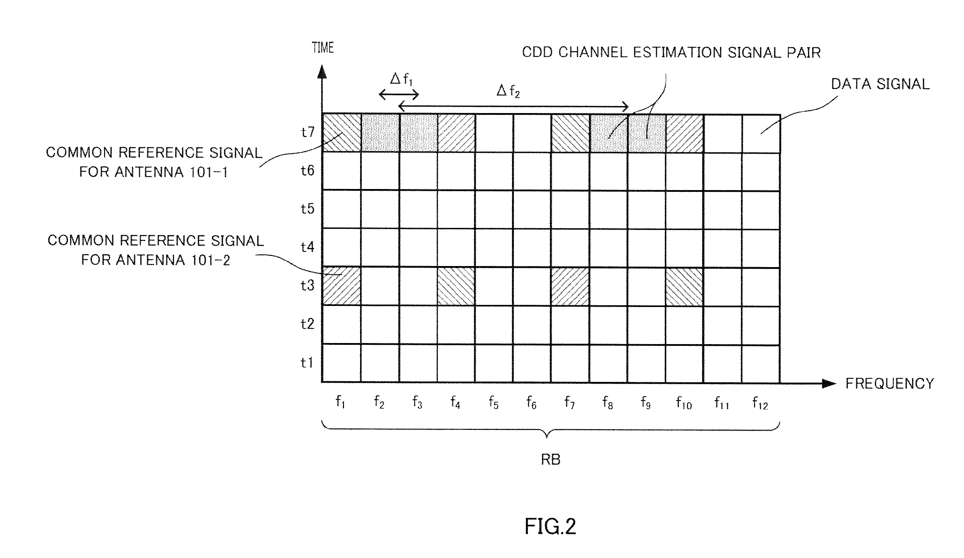

FIG.2 shows an RB formed with twelve subcarriers, $f_1$ to $f_{12}$. As shown in FIG.2, either a common reference signal for antenna 101-1, a common reference signal for antenna 101-2 or a data signal is mapped to the subcarriers. Further, the number of cyclic delay shift samples is N/2 here. Here, N is the number of subcarriers per RB. That is, N=12 in FIG.2.

Mode identifying section 110 specifies the data signals mapped to $f_2$, $f_3$, $f_8$ and $f_9$ at time t7 in the RB shown in FIG.2, as CDD channel estimation signals. Further, mode identifying section 110 sets the two CDD channel estimation signals mapped to $f_2$ and $f_3$ as one CDD channel estimation signal pair, and sets the two CDD channel estimation signals mapped to $f_8$ and $f_9$ as the other CDD channel estimation signal pair. To reduce a CDD channel estimation error using a common reference signal, it is preferable to map a CDD channel estimation signal near a mapping position of a common reference signal.

Here, mode identifying section 110 specifies CDD channel estimation signal pairs according to the following criteria 1 to 3. Here, the CDD channel fluctuation period in SD-CDD is $\Delta f_{SD}$, and the CDD channel fluctuation period in LD-CDD is $\Delta f_{LD}$.

<Criterion 1> The frequency interval $\Delta f_1$ between the data signals forming a CDD channel estimation signal pair is determined by next equation 1.

[ 1 ]

$$\Delta f_1 = \frac{\Delta f_{LD}}{2} \quad \dots (\mathrm{E\,q\,u\,a\,t\,i\,o\,n}\ 1)$$

That is, $\Delta f_1$ is set with an interval half the CDD channel fluctuation period in LD-CDD. By this means, in the CDD channel in LD-CDD, two CDD channel antiphase estimation signals form a pair, so that mode identifying section 110 can carry out the CDD channel estimation that reflects a whole CDD channel fluctuation in LD-CDD.

<Criterion 2>

At least two CDD channel estimation signal pairs are mapped in one RB. This is because mode identifying section 110 identifies a CDD mode using different CDD channel estimation signal pairs in an RB.

<Criterion 3>

The frequency interval $\Delta f_2$ between different CDD channel estimation signal pairs is determined by next equation 2.

[ 2 ]

$$\Delta f_2 = m\Delta f_1 << \frac{\Delta f_{SD}}{2} \quad \dots (\mathrm{E\,q\,u\,a\,t\,i\,o\,n}\ 2)$$

Here, m is a natural number determined by the relationship between $\Delta f_1$ and $\Delta f_2$. That is, $\Delta f_2$ is an integral multiple of $\Delta f_1$ and set an interval substantially shorter than half the CDD channel fluctuation period in SD-CDD. By this means, different CDD channel estimation signal pairs are mapped to approximate in-phase positions in a CDD channel fluctuation period in SD-CDD.

In this way, mode identifying section 110 identifies the CDD mode of an interference signal from another cell using the CDD channel estimation signals, the mapping positions of which are specified in advance.

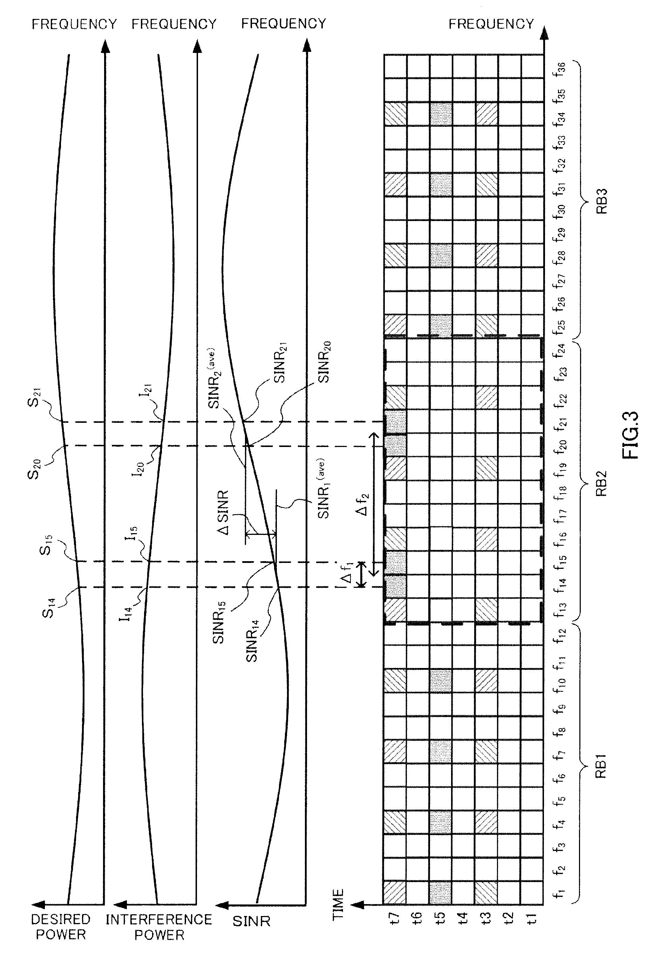

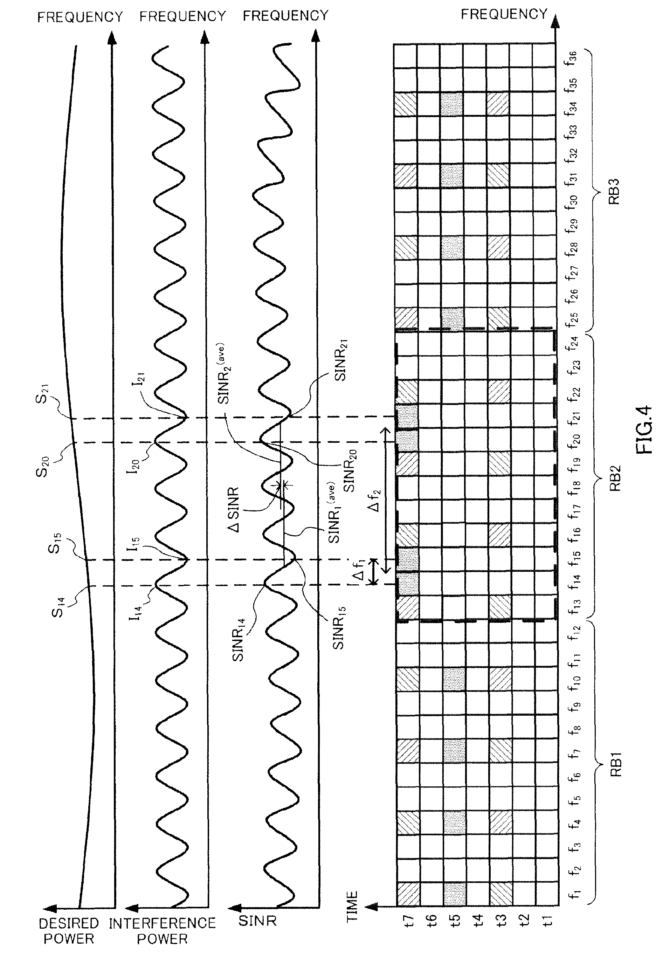

The explanation will be given below using FIGs.3 and 4. FIG.3 shows the frequency characteristics where the CDD mode of an interference signal from another cell is SD-CDD, and FIG.4 shows the frequency characteristics where the CDD mode of an interference signal from another cell is LD-CDD. Further, in RB2 shown in FIGs.3 and 4, CDD channel estimation signals are mapped to $f_{14}$, $f_{15}$, $f_{20}$ and $f_{21}$ at t7. Further, as shown in FIGs.3 and 4, one CDD channel estimation signal pair is configured with the CDD channel estimation signal mapped to $f_{14}$ and the CDD channel estimation signal mapped to $f_{15}$, and the other CDD channel estimation signal pair is configured with the CDD channel estimation signal mapped to $f_{20}$ and the CDD channel estimation signal mapped to $f_{21}$.

First, mode identifying section 110 measures SINRs per CDD channel estimation signal. To be more specific, in RB2 shown in FIGs.3 and 4, mode identifying section 110 measures the SINRs of the CDD channel estimation signals mapped to $f_{14}$, $f_{15}$, $f_{20}$ and $f_{21}$. Here, the SINRs of the CDD channel estimation signals mapped to $f_{14}$, $f_{15}$, $f_{20}$ and $f_{21}$ are $SINR_{14}$, $SINR_{15}$, $SINR_{20}$ and $SINR_{21}$, respectively.

Next, mode identifying section 110 calculates each $SINR_i^{(ave)}$, which is an average SINR of a CDD channel estimation signal pair, using the upper of next equation 3.

[ 3 ]

$$SINR_i^{(ave)} = \begin{cases} \dfrac{SINR_k + SINR_{k+\Delta k}}{2} \\[2mm] \dfrac{S_k + S_{k+\Delta k}}{I_k + I_{k+\Delta k}} \end{cases} \quad \ldots(\mathrm{Equation\ 3})$$

Here, i represents the CDD channel signal pair number in the RB, k represents the subcarrier number, and $\Delta k$ is normalized from $\Delta f_1$ with a subcarrier bandwidth. To be more specific, in RB2 shown in FIGs.3 and 4, mode identifying section 110 calculates $SINR_1^{(ave)}$ from $SINR_{14}$ and $SINR_{15}$, and calculates $SINR_2^{(ave)}$ from $SINR_{20}$ and $SINR_{21}$. Further, mode identifying section 110 may calculate $SINR_i^{(aye)}$ using the lower of equation 3. $S_k$ shown in the lower of equation 3 is the desired power in subcarrier k and $I_k$ is the interference power in subcarrier k. That is, mode identifying section 110 may calculate $SINR_1^{(ave)}$ from desired power $S_{14}$ and $S_{15}$ and interference power $I_{14}$ and $I_{15}$, and calculate $SINR_2^{(ave)}$ from desired power $S_{20}$ and $S_{21}$ and interference power $I_{20}$ and $I_{21}$.

Then, mode identifying section 110 calculates $\Delta SINR$, which is the difference between the average SINRs of the different CDD channel estimation signal pairs, from next equation 4.

[ 4 ]

$$\Delta SINR = \left| SINR_1^{(ave)} - SINR_2^{(ave)} \right| \quad \ldots(\mathrm{Equation\ 4})$$

Here, the $\Delta SINR$ in cases where the CDD mode of the interference signal from another cell is LD-CDD (FIG. 4) becomes less than the $\Delta SINR$ in cases where the CDD mode of an interference signal from another cell is SD-CDD (FIG.3), and becomes approximately zero.

When the CDD mode of the interference signal from another cell is SD-CDD (FIG.3), the different CDD channel estimation signal pairs mapped in one RB, are mapped at intervals substantially shorter than half the CDD channel fluctuation period in SD-CDD. By this means, in many cases, the CDD channel estimation signals configuring different CDD channel estimation signal pairs have different values not including a case where the CDD channel estimation signals are positioned near peaks or valleys in the CDD channel fluctuation period of SD-CDD. To be more specific, as shown in FIG.3, the CDD channel estimation signal mapped to $f_{14}$ ($f_{15}$) and the CDD channel estimation signal mapped to $f_{20}$ ($f_{21}$) are only one sixth of the CDD channel fluctuation period in SD-CDD apart. That is, in the SINR characteristic shown in FIG.3, both $SINR_{14}$ ($SINR_{15}$) and $SINR_{20}$ ($SINR_{21}$) are placed between the peak and the valley in the CDD channel fluctuation period of SD-CDD. Therefore, $SINR_{14}$ ($SINR_{15}$) and $SINR_{20}$ ($SINR_{21}$) are different values. Consequently, $SINR_1^{(ave)}$ and $SINR_2^{(ave)}$ are different values.

Meanwhile, when the CDD mode of the interference signal from another cell is LD-CDD (FIG.4), different CDD channel estimation signal pairs mapped in one RB are mapped at frequency intervals half the CDD channel fluctuation period in LD-CDD. By this means, the average SINRs of different CDD channel estimation signal pairs are approximately the same value. To be more specific, as shown in FIG.4, the CDD channel estimation signal mapped to $f_{14}$ ($f_{15}$) and the CDD channel estimation signal mapped to $f_{20}$ ($f_{21}$) are three CDD channel fluctuation periods in L D-CDD apart. That is, in the SINR characteristic shown in FIG.4, both $SINR_{14}$ ($SINR_{15}$) and $SINR_{20}$ ($SINR_{21}$) are placed both the peak in the CDD channel fluctuation period of LD-CDD (the valley of the channel fluctuation period). Consequently, $SINR_{14}$ ($SINR_{15}$) and $SINR_{20}$ ($SINR_{21}$) are approximately the same value and $SINR_1^{(ave)}$ and $SINR_2^{(ave)}$ are approximately the same value.

In this way, the values of $\Delta SINR$ vary depending on whether the CDD mode of an interference signal from another cell is SD-CDD or LD-CDD.

Then, mode identifying section 110 identifies the CDD mode of an interference signal from another cell based on a calculated ΔSINR. To be more specific, mode identifying section 110 identifies the CDD mode of an interference signal from another cell according to next equation 5.

[ 5 ]

$$\begin{cases} \Delta SINR \geq SINR_{th} \Rightarrow SD-CDD \\ \Delta SINR < SINR_{th} \Rightarrow LD-CDD \end{cases} \quad \dots (\mathrm{E\,q\,u\,a\,t\,i\,o\,n\ 5})$$

Here, $SINR_{th}$ refers to the threshold to identify a CDD mode. That is, when the ΔSINR is equal to or more than $SINR_{th}$ (in the case of FIG.3), mode identifying section 110 identifies the CDD mode of an interference signal from another cell as SD-CDD, and meanwhile, when the ΔSINR is less than $SINR_{th}$ (in the case of FIG.4), mode identifying section 110 identifies the CDD mode of an interference signal from another cell as LD-CDD.

Then, only when the identification result of a CDD mode of an interference signal from another cell is SD-CDD, mode identifying section 110 calculates an average SINR using the CDD channel estimation signals. To be more specific, in FIG.3, mode identifying section 110 calculates $SINR_{CDD}$ from next equation 6.

[ 6 ]

$$SINR_{CDD} = \frac{S_{15} + S_{16} + S_{21} + S_{22}}{I_{15} + I_{16} + I_{21} + I_{22}} \quad \dots (\mathrm{E\,q\,u\,a\,t\,i\,o\,n\ 6})$$

Here, when the identification result of a CDD mode is LD-CDD, as shown in FIG.4, the CDD channel fluctuation is significant, so that the effect of averaging interference power per subcarrier improves. That is, the average interference power is the same as a case where another cell does not apply LD-CDD. Therefore, when the identification result of a CDD-mode is LD-CDD, compensation of CDD channel estimation using a common reference signal is not necessary.

Then, mode identifying section 110 generates a $CQI_{CDD}$ corresponding to an average $SINR_{CDD}$.

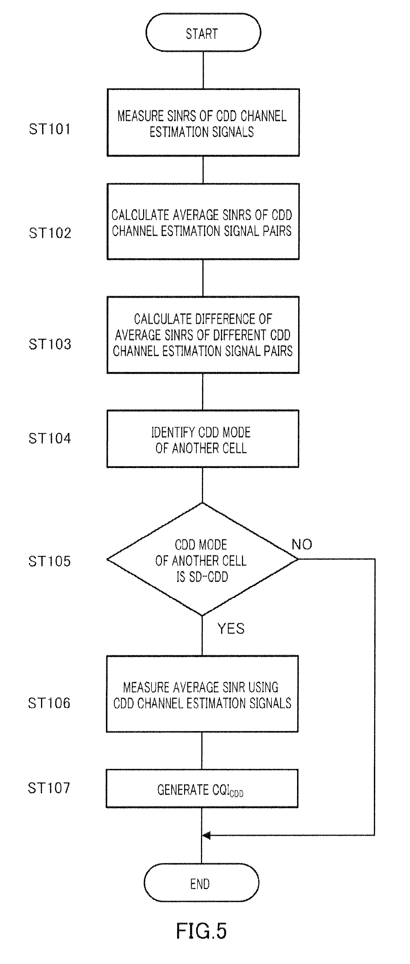

Next, the process flows of mode identifying section 110 will be explained using the flow chart of FIG. 5.

In ST (step) 101, mode identifying section 110 measures the SINRs on a per CDD channel estimation signal basis.

In ST102, mode identifying section 110 calculates the average SINRs of the CDD channel estimation signal pairs.

In ST103, mode identifying section 110 calculates the difference between the average SINRs of the different CDD channel estimation signal pairs in an RB.

In ST104, mode identifying section 110 compares the difference between the average SINRs that have been calculated in ST 103 and a threshold, to identify a CDD mode.

When the identification result in ST 104 is SD-CDD (ST 105: "YES"), in ST 106, mode identifying section 110 measures an average SINR using all the CDD channel estimation signals.

In ST 107, mode identifying section 110 generates a $CQI_{CDD}$ corresponding to the measured average SINR.

On the other hand, when the identification result in ST 104 is LD-CDD (ST 105: "NO"), mode identifying section 110 finishes the mode identification process.

Next, the feedback information generation process in feedback information generating section 111 will be described in detail.

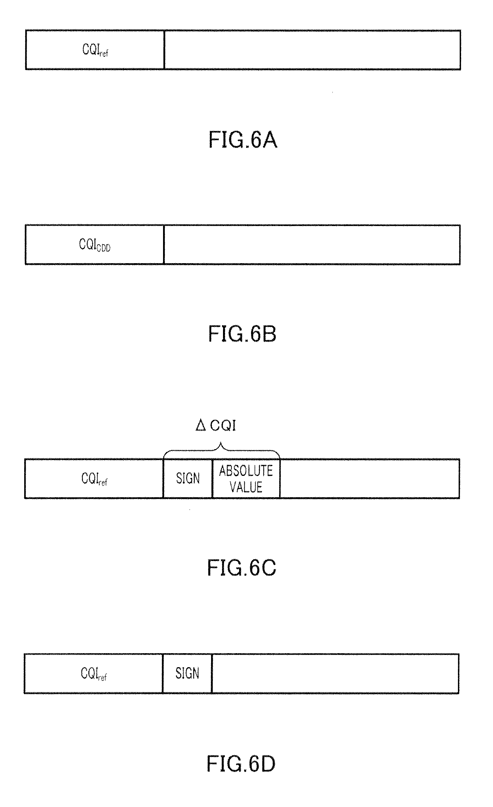

When feedback information generating section 111 does not receive $CQI_{CDD}$ as input from mode identifying section 110, feedback information generating section 111 generates feedback information using $CQI_{ref}$ as in the conventional cases as shown in FIG.6A.

On the other hand, when feedback information generating section 111 receives $CQI_{CDD}$ as input from mode identifying section 110, feedback information generating section 111 generates feedback information using $CQI_{ref}$ or $CQI_{CDD}$. Now, examples 1 to 3 of generating feedback information in feedback information generating section 111 will be explained below in cases where feedback information generating section 111 receives $CQI_{CDD}$ as input from mode identifying section 110.

<Feedback information generation example 1 (FIG.6B)>

With this generation example, as shown in FIG.6B, feedback information generating section 111 generates feedback information using $CQI_{CDD}$. By this means, it is possible to reflect to a CQI the influence of interference in CDD channel by another cell, so that it is possible to conduct more accurate scheduling in the base station. Further, with this generation example, feedback information can be generated by changing $CQI_{ref}$ shown in FIG.6A to $CQI_{CDD}$ only, so that, according to this generation example, it is possible to generate feedback information using the same format as in conventional cases.

<Feedback information generation example 2 (FIG.6C)>

With this generation example, feedback information generating section 111 calculates $\Delta CQI$, which is the difference between $CQI_{ref}$ and $CQI_{CDD}$, to generate feedback information using $CQI_{ref}$ and $\Delta CQI$ as shown in FIG.6C. Here, $\Delta CQI$ is represented by a sign ("+" or "-") and an absolute value. By this means, $CQI_{ref}$ is corrected by $\Delta CQI$ and the accuracy of $CQI_{ref}$ improves, so that it is possible to conduct more accurate scheduling in the base station.

<Feedback information generation example 3 (FIG.6D)>

With this generation example, as shown in FIG.6D, feedback information generating section 111 generates feedback information using $CQI_{ref}$ and the sign of $\Delta CQI$. By setting the amount of correction of a CQI level in advance, in the base station, the $CQI_{ref}$ is increased or decreased by the amount of correction, according to the sign of $\Delta CQI$. By this means, the base station can correct $CQI_{ref}$ with little feedback information than in feedback information generation example 2.

As above, feedback information generation examples 1 to 3 in feedback information generating section 111 in cases where feedback information generating section 111 receives $CQI_{CDD}$ as input from mode identifying section 110, have been explained.

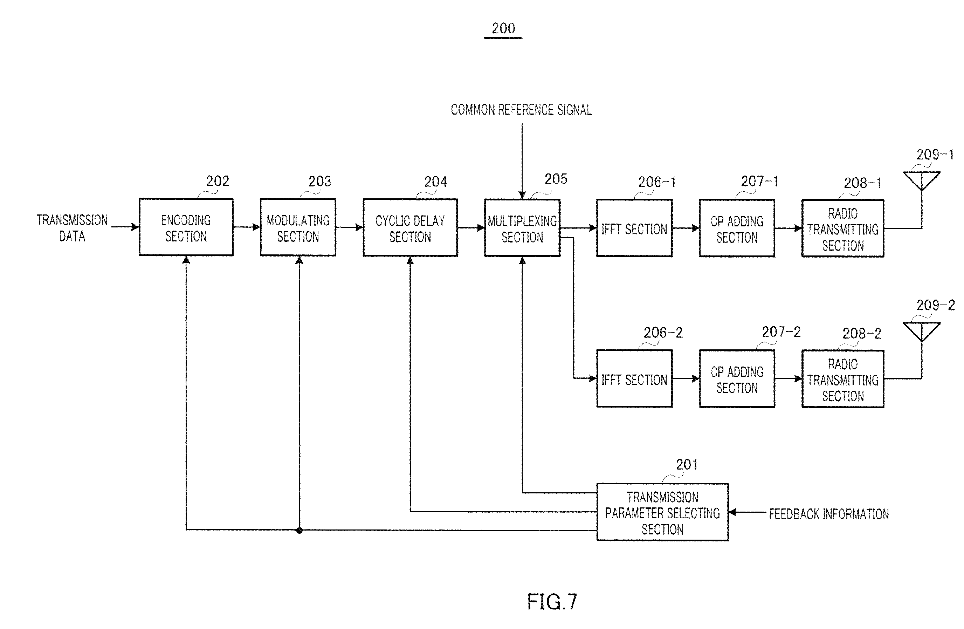

Next, FIG.7 shows the configuration of base station 200 according to the present embodiment.

Based on a CQI included in feedback information from mobile station 100, transmission parameter selecting section 201 selects an MCS level (a coding rate and a modulation scheme) and a CDD mode (SD-CDD or LD-CDD) for transmission data to mobile stations. Further, transmission parameter selecting section 201 generates a control signal showing the selected MCS level and CDD mode. Then, transmission parameter selecting section 201 outputs the MCS level to encoding section 202 and modulating section 203, the CDD mode to cyclic delay section 204 and the control signal to multiplexing section 205.

Encoding section 202 encodes transmission data according to the coding rate received as input from transmission parameter selecting section 201. Then, encoding section 202 outputs the encoded transmission data to modulating section 203.

Modulating section 203 modulates the encoded transmission data received as input from encoding section 202, according to the modulation scheme received as input from transmission parameter selecting section 201, to generate a data symbol. Then, modulating section 203 outputs the data symbol to cyclic delay section 204.

Cyclic delay section 204 gives cyclic delay to the data symbol received as input from modulating section 203, according to the CDD mode received as input from transmission parameter selecting section 201. Then, cyclic delay section 204 outputs the data symbol after the cyclic delay to multiplexing section 205.

Multiplexing section 205 multiplexes a common reference signal, the control signal received as input from transmission parameter selecting section 201 and the data symbol received as input from cyclic delay section 204. Then, multiplexing section 205 converts the multiplexed signal in series, to parallel signals of two sequences, and maps these parallel signals to a plurality of RBs. Then, the multiplexing section outputs the signals mapped to the RBs per sequence to IFFT (Inverse fast Fourier Transform) sections 206-1 and 206-2.

IFFT section 206-1, CP adding section 207-1 and radio transmitting section 208-1 are provided corresponding to antenna 209-1. Also, IFFT section 206-2, CP adding section 207-2 and radio transmitting section 208-2 are provided corresponding to antenna 209-2.

IFFT sections 206-1 and 206-2 perform an IFFT for subcarriers to which the signals received as input from multiplexing section 205 are mapped, and convert the frequency domain signals to time domain signals, to generate OFDM symbols. Then, IFFT sections 206-1 and 206-2 output the OFDM symbols to CP adding sections 207-1 and 207-2, respectively.

CP adding sections 207-1 and 207-2 add the same signal as the tail part of the OFDM symbols, to the beginning of those OFDM symbols, as a CP. Then, CP adding sections 207-1 and 207-2 output the OFDM symbols after addition of a CP to radio transmitting sections 208-1 and 208-2, respectively.

Radio transmitting sections 208-1 and 208-2 perform transmitting processing including D/A conversion, amplification and up-conversion on the OFDM symbols after the addition of a CP, and transmit the OFDM symbols after transmitting processing from antennas 209-1 and 209-2 at the same time. By this means, a plurality of OFDM symbols are transmitted from a plurality of antennas by using CDD.

In this way, according to the present embodiment, by using data signals as CDD channel estimation signals, the difference of CDD channel fluctuations resulting from different CDD modes can be identified, so that it is possible to identify a CDD mode of an interference signal from another cell accurately even when a CDD is used. By this means, it is possible to measure the channel quality of a CDD channel accurately, thereby generating a proper CQI definitely.

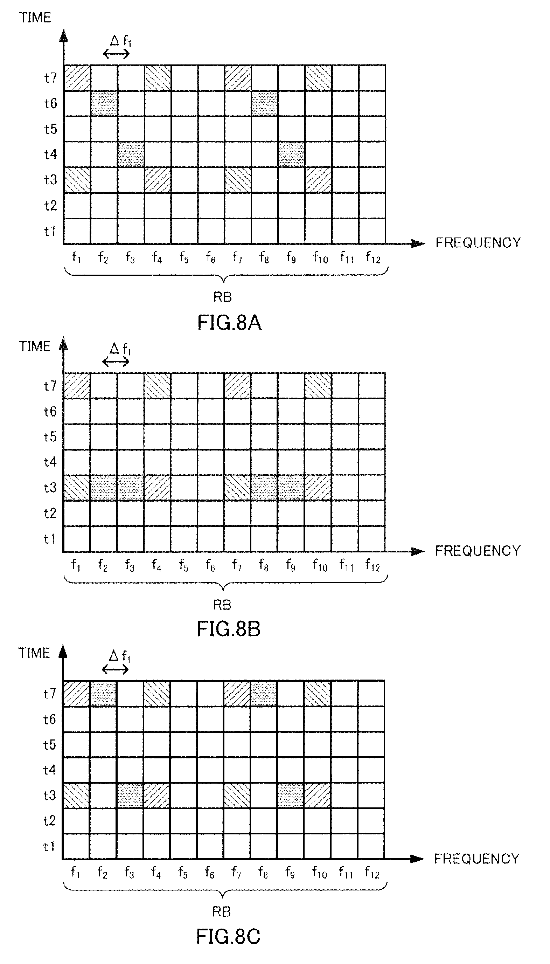

Although a case has been explained above with the present embodiment where a plurality of CDD channel estimation signals forming the CDD channel estimation signal pairs as shown in FIG.2 are mapped to the same time t7, a plurality of CDD channel estimation signals forming the CDD channel estimation signal pairs are not necessary to be mapped to the same time, and they may be mapped near the positions common reference signals are mapped. For example, a plurality of CDD channel estimation signals forming the CDD channel estimation signal pairs may be mapped to t4 and t6 between t3 and t7 where common reference signals are mapped as shown in FIG.8A, to t3 where common reference signals are mapped as shown in FIG.8B, or to t3 and t7 where common reference signals are mapped as shown in FIG.8C.

(Embodiment 2)

The present embodiment is different from Embodiment 1 in identifying the CDD mode of an interference signal from another cell, using CDD channel estimation signal pairs configured with a plurality of dedicated reference signals.

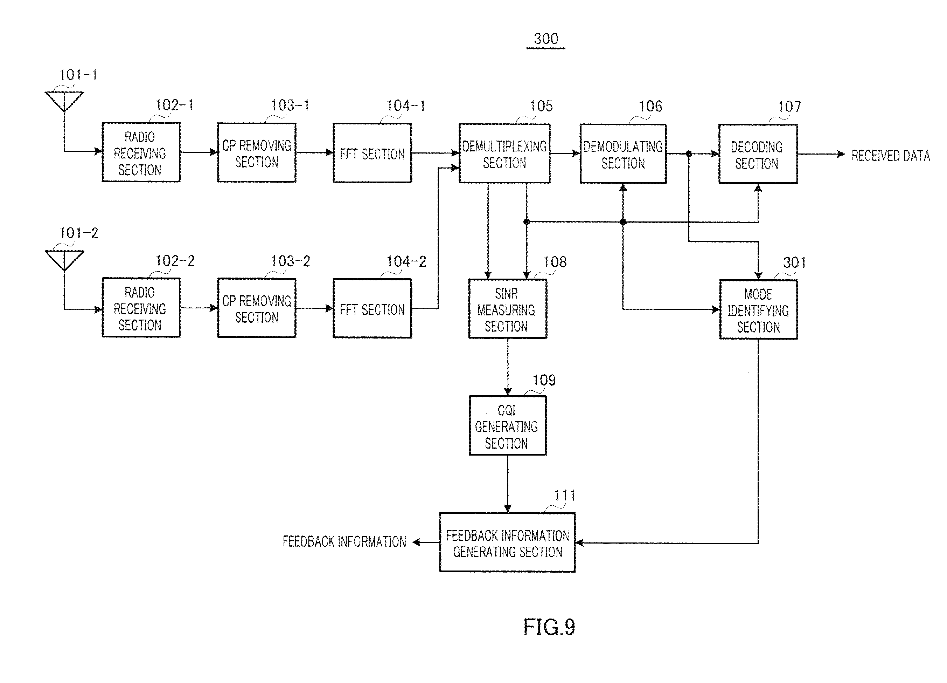

FIG.9 shows the configuration of mobile station 300 according to the present embodiment. In FIG.9, the same components will be assigned the same reference numerals as in Embodiment 1 (FIG.1), and therefore the description thereof will be omitted.

In a data signal received as input from demodulating section 106, mode identifying section 301 specifies dedicated reference signals based on mapping information designated by a control signal received as input from demultiplexing section 105. Then, mode identifying section 301 identifies the CDD mode of an interference signal from another cell using the specified dedicated reference signals in the same way as in Embodiment 1.

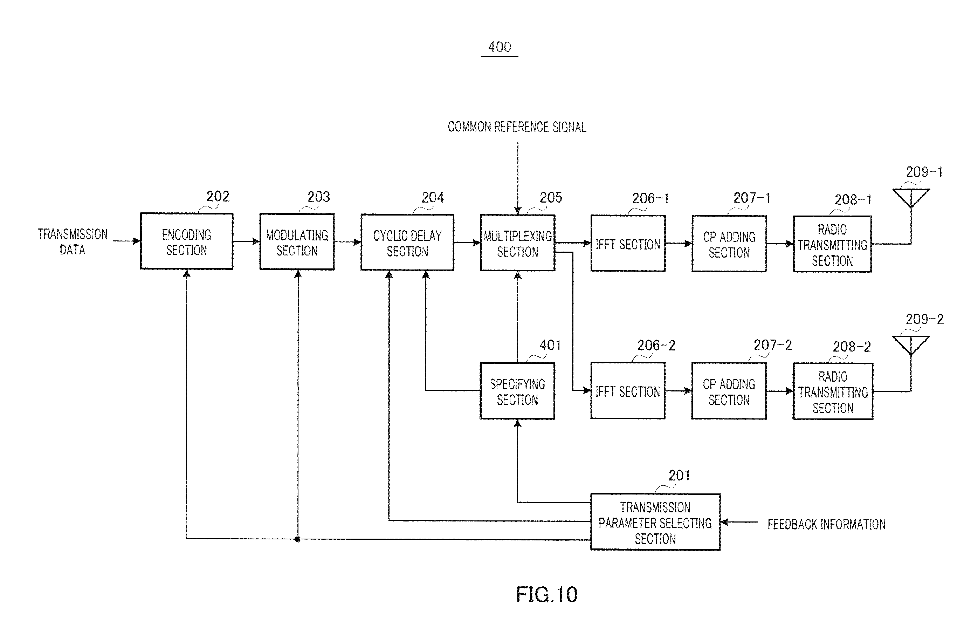

Next, FIG.10 shows the configuration of base station 400 according to the present embodiment. In FIG.10, the same components will be assigned the same reference numerals as in Embodiment 1 (FIG.7), and therefore the description thereof will be omitted.

When a CDD mode designated by a control signal received as input from transmission parameter selecting section 201 is SD-CDD, specifying section 401 outputs a dedicated reference signal to cyclic delay section 204. Further, specifying section 401 specifies the position the dedicated reference signal is mapped. Then, specifying section 401 adds mapping information showing the mapping position of the dedicated reference signal to the control signal received as input from transmission parameter selecting section 201, and outputs the control signal to which the mapping information is added, to multiplexing section 205.

On the other hand, when a CDD mode designated by a control signal received as input from transmission parameter selecting section 201 is LD-CDD, specifying section 401 outputs the control signal received as input from transmission parameter selecting section 201 directly to multiplexing section 205.

Cyclic delay section 204 gives cyclic delay to the dedicated reference signal received as input from specifying section 401, according to the CDD mode received as input from transmission parameter selecting section 201. Then, cyclic delay section 204 outputs the dedicated reference signal after the cyclic delay to multiplexing section 205.

According to the control signal received as input from specifying section 401, multiplexing section 205 maps the dedicated reference signal received as input from cyclic delay section 204 to a plurality of subcarriers.

Next, the mapping position of the dedicated reference signal specified in specifying section 401 will be explained.

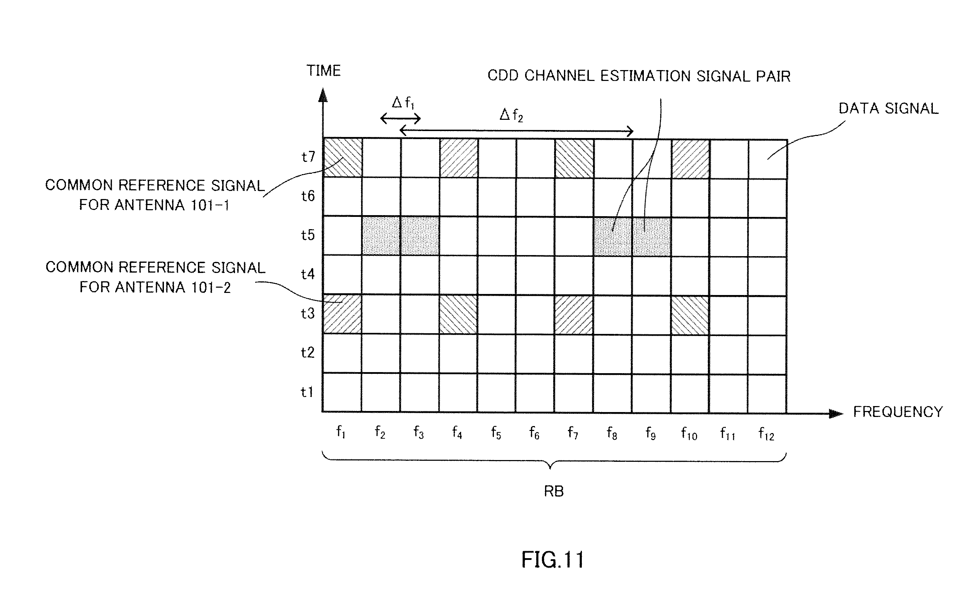

As shown in FIG.11, for example, specifying section 401 specifies so as to map the dedicated reference signal to $f_2$, $f_3$, $f_8$ and $f_9$ at t5. Here, one CDD channel estimation signal pair is configured with the dedicated reference signal mapped to $f_2$ and the dedicated reference signal mapped to $f_3$, and the other CDD channel estimation signal pair is configured with the dedicated reference signal mapped to $f_8$ and the dedicated reference signal mapped to $f_9$.

A dedicated reference signal is known between a base station and a mobile station in advance, so that a CDD channel estimation signal in the present embodiment may not be mapped near mapping positions to which a common reference signal is mapped as Embodiment 1. Then, as shown in FIG.11, specifying section 401 specifies the mapping position of a CDD channel estimation signal pair ($f_2$ and $f_3$ or $f_8$ and $f_9$) in the middle of the mapping positions of common reference signals ($f_1$ and $f_4$ or $f_7$ and $f_{10}$) in the frequency domain, and specifies the mapping position of a CDD channel estimation signal pair ($t_5$) in the middle of the mapping positions of common reference signals ($t_3$ and $t_7$) in the time domain. By this means, a common reference signal and a dedicated reference signal are mapped in the frequency domain and the time domain in a distributed manner, so that it is possible to reduce errors in estimation between a reference signal known in advance between the base station and the mobile station and the actual data signal.

In this way, according to the present embodiment, a dedicated reference signal known between the mobile station and the base station is used, so that it is possible to identify the CDD mode of an interference signal from another cell more accurately than in Embodiment 1. By this means, with the present embodiment, an SINR can be measured more accurately than with Embodiment 1, so that it is possible to generate a more accurate CQI than in Embodiment 1.

The embodiments of the present invention have been explained.

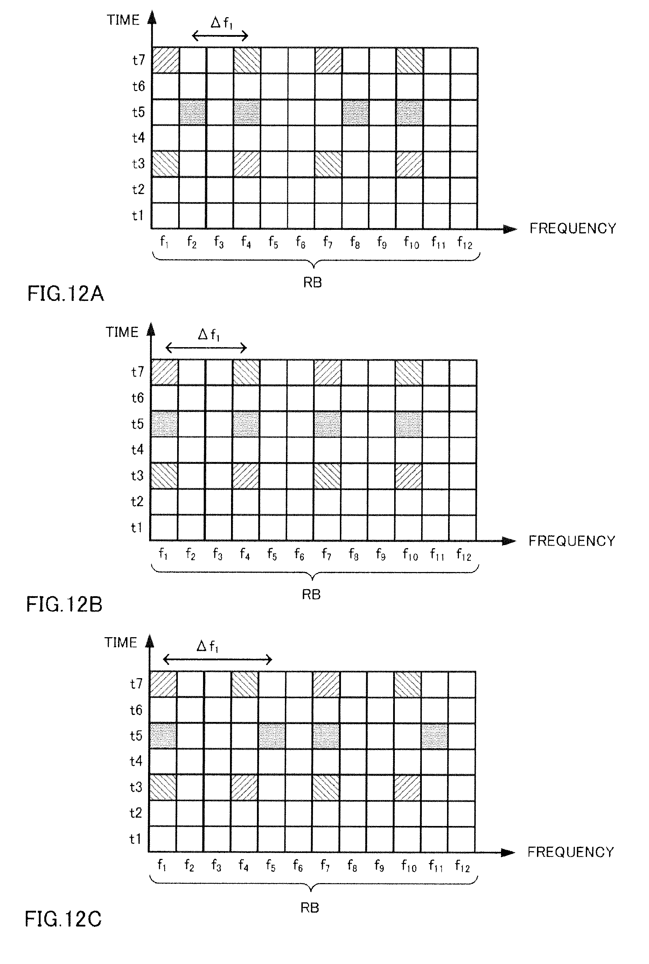

Although cases have been explained above with the embodiments where the number of cyclic delay shift samples is N/2 as shown in FIGs.2 and 11, the number of cyclic delay shift samples is not limited to N/2 with the present invention. For example, in cases where the number of cyclic delay shift samples is N/3, a CDD channel estimation signal pair is mapped at one-subcarrier intervals as shown in FIG.12A. Further, in cases where the number of cyclic delay shift samples is N/4, CDD channel estimation signal pairs are mapped at two-subcarrier intervals as shown in FIG.12B. Further, in cases where the number of cyclic delay shift samples is N/5, a CDD channel estimation signal pair is mapped at three-subcarrier intervals as shown in FIG.12C.

CDD may be referred to as "CSD (cyclic shift diversity)." A CP may be referred to as a "guard interval (GI)." A subcarrier may be referred to as a "tone." Further, a base station apparatus may be referred to as a "Node B" and a mobile station apparatus may be referred to as a "UE."

Further, although cases have been explained with the embodiments above where one RB is used for one transmission data, the present invention may be implemented in cases where a plurality of RBs are used for one transmission data. In this case, a mobile station may generate CQIs every plurality of RBs to feed them back to a base station, and generate one CQI for a plurality of RBs to feed it back to the base station. Further, in cases where the same CQIs are used for a plurality of RBs to which one transmission data is divided and mapped, the base station may perform scheduling according to an average of the CQIs of a plurality of RBs, and may perform scheduling according to the lowest CQI among the CQIs of a plurality of RBs.

Further, although cases have been described with the above embodiment as examples where the present invention is configured by hardware, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI," or "ultra LSI" depending on differing extents of integration.

Further, the method of circuit integration is not limited to LSIs, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Application No.2007-145882, filed on May 31, 2007, including the specification, drawings and abstract, is incorporated herein by reference in its entirety.

Industrial Applicability

The present invention is applicable to, for example, mobile communication systems.

**Claims**

1. A radio communication mobile station apparatus comprising:

   a receiving section that receives a multicarrier signal transmitted with cyclic delay diversity;
   a measuring section that measures, in the multicarrier signal, channel quality of a first signal group mapped to a plurality of first subcarriers and channel quality of a second signal group mapped to a plurality of second subcarriers that are different from the plurality of first subcarriers; and
   an identifying section that identifies a cyclic delay diversity mode of an interference signal from a remote cell based on a difference between the channel quality of the first signal group and the channel quality of the second signal group.

2. The radio communication mobile station apparatus according to claim 1, wherein, when the difference is equal to or more than a threshold, the identifying section identifies the cyclic delay diversity mode as a small delay cyclic delay diversity, and when the difference is less than the threshold, the identifying section identifies the cyclic delay diversity mode as a large delay cyclic delay diversity.

3. The radio communication mobile station apparatus according to claim 1, wherein the first signal group and the second signal group are each configured with a plurality of data signals.

4. The radio communication mobile station apparatus according to claim 1, wherein the first signal group and the second signal group are each configured with a plurality of dedicated reference signals.

5. The radio communication mobile station apparatus according to claim 1, wherein the identifying section comprises a generating section that, when the identifying section identifies the cyclic delay diversity mode as the small delay cyclic delay diversity, generates a channel quality indicator corresponding to channel quality measured from all signals in the first signal group and the second signal group, and generates feedback information using the channel quality indicator.

6. The radio communication mobile station apparatus according to claim 1, wherein:

the receiving section receives mapping information showing a mapping position of the first signal group and a mapping position of the second signal group; and
the identifying section identifies the mapping position of the first signal group and the mapping position of the second signal group based on the mapping information.

7. A cyclic delay diversity mode identification method comprising, i n a multicarrier signal transmitted with cyclic delay diversity, identifying a cyclic delay diversity mode of an interference signal from a remote cell based on a difference between channel quality of a first signal group mapped to a plurality of first subcarriers and channel quality of a second signal group mapped to a plurality of second subcarriers that are different from the first subcarriers.

FIG.1

FIG.2

FIG.3

DESIRED POWER

FREQUENCY

INTERFERENCE POWER

FREQUENCY

$S_{14}$  $S_{15}$  $S_{20}$  $S_{21}$

$I_{14}$  $I_{15}$  $I_{20}$  $I_{21}$

SINR

FREQUENCY

$SINR_{14}$  $\Delta SINR$  $SINR_2^{(ave)}$

$SINR_{15}$  $SINR_1^{(ave)}$  $SINR_{20}$  $SINR_{21}$

TIME

$\Delta f_1$  $\Delta f_2$

t7
t6
t5
t4
t3
t2
t1

$f_1$ $f_2$ $f_3$ $f_4$ $f_5$ $f_6$ $f_7$ $f_8$ $f_9$ $f_{10}$ $f_{11}$ $f_{12}$ $f_{13}$ $f_{14}$ $f_{15}$ $f_{16}$ $f_{17}$ $f_{18}$ $f_{19}$ $f_{20}$ $f_{21}$ $f_{22}$ $f_{23}$ $f_{24}$ $f_{25}$ $f_{26}$ $f_{27}$ $f_{28}$ $f_{29}$ $f_{30}$ $f_{31}$ $f_{32}$ $f_{33}$ $f_{34}$ $f_{35}$ $f_{36}$

FREQUENCY

RB1  RB2  RB3

FIG.4

FIG.5

| CQI$_{ref}$ | |
|---|---|

FIG.6A

| CQI$_{CDD}$ | |
|---|---|

FIG.6B

$\Delta$ CQI

| CQI$_{ref}$ | SIGN | ABSOLUTE VALUE | |
|---|---|---|---|

FIG.6C

| CQI$_{ref}$ | SIGN | |
|---|---|---|

FIG.6D

FIG.7

FIG.8A

FIG.8B

FIG.8C

EP 2 151 937 A1

FIG.9

FIG.10

FIG.11

FIG.12A

FIG.12B

FIG.12C

## INTERNATIONAL SEARCH REPORT

| | International application No. |
|---|---|
| | PCT/JP2008/001379 |

A. CLASSIFICATION OF SUBJECT MATTER
*H04J15/00*(2006.01)i, *H04B7/02*(2006.01)i, *H04B7/04*(2006.01)i, *H04B7/06*
(2006.01)i, *H04J11/00*(2006.01)i, *H04Q7/36*(2006.01)i

According to International Patent Classification (IPC) or to both national classification and IPC

B. FIELDS SEARCHED

Minimum documentation searched (classification system followed by classification symbols)
H04J15/00, H04B7/02, H04B7/04, H04B7/06, H04J11/00, H04Q7/36

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | LG Electronics et al., Precoding for E-UTRA downlink MIMO, 3GPP TSG RAN WG1 Meeting #47bis R1-070236, 2007.01, pp.1-3 | 1-7 |
| A | WO 2007/052768 A1 (Matsushita Electric Industrial Co., Ltd.), 10 May, 2007 (10.05.07), Par. Nos. [0029] to [0042] (Family: none) | 1-7 |
| A | NTT DoCoMo, Channel Dependent Scheduling with Cyclic Delay Diversity, 3GPP TSG-RAN WG1 Meeting #45 R1-061192, 2006.05, pp.1-5 | 1-7 |

☒ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 July, 2008 (23.07.08) | 05 August, 2008 (05.08.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/001379 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2003-018124 A  (Matsushita Electric Industrial Co., Ltd.), 17 January, 2003 (17.01.03), Par. Nos. [0038], [0081] & WO 2003/005617 A1     & EP 1347588 A1 & US 2004/0028007 A1    & CN 1489843 A | 1-7 |
| A | WO 2006/077620 A1  (Fujitsu Ltd.), 27 July, 2006 (27.07.06), Page 17, line 24 to page 18, line 5 & EP 1841112 A1          & US 2007/0258509 A1 | 1-7 |

Form PCT/ISA/210 (continuation of second sheet) (April 2007)

## EP 2 151 937 A1

**Patent documents cited in the description**

- JP 2007145882 A